# EUROPEAN PATENT APPLICATION

(11) **EP 4 815 371 A1**
(43) Date of publication of application: **30.09.2026**
(21) Application number: 26167326.3
(22) Date of filing: 24.03.2026
(51) Int. Cl.: H04L 9/40, H04L 9/32, G06F 21/44

(54) **METHOD AND APPARATUS FOR MANAGING MACHINE IDENTIFIER BASED ON CLOUD ENVIRONMENT**

(30) Priority: 28.03.2025 KR 20250040689
(71) Applicant: Penta Security Inc., Yeongdeungpo-gu, Seoul 07241 (KR)
(72) Inventor: LEE, Ji Hun, 03780 Seodaemun-gu, Seoul (KR); PARK, A Young, 07044 Dongjak-gu, Seoul (KR); CHOI, Kyu Bin, 22678 Seo-gu, Incheon (KR); KIM, Tae Gyun, 16811 Yongin-si, Gyeonggi-do (KR)
(74) Representative: Stöckeler, Ferdinand

(57) **Abstract**

A technology for issuing certificates for applications dynamically generated in a cloud environment and automating machine ID management is disclosed. A cloud environment-based machine ID management method performed by a product server includes receiving, through an integrated gateway, a certificate issuance request from an agent in a cluster of any one cloud provider among a plurality of cloud providers, delivering a policy verification request for the certificate issuance request to a certificate policy engine, receiving a policy-based certificate issuance approval from the certificate policy engine, based on the certificate issuance approval, delivering a certificate issuance request to a certificate issuance module, and delivering an issued certificate to the agent.

## Description

### BACKGROUND

### 1. Technical Field

The present disclosure relates to a technology for issuing certificates for applications dynamically generated in a cloud environment and automating management of machine Identifier.

### 2. Description of the Related Art

An application certificate is a digital certificate that proves whether a certain program or application is trustworthy. An application certificate is used for identity authentication, prevention of forgery and falsification, secure connections, and so on.

Recently, with the expansion of cloud environments and container environments, the number of instances or machines to be managed as a whole is rapidly increasing. Accordingly, existing cloud certificate management schemes are revealing technical limitations.

For example, existing cloud certificate management schemes have low reliability with respect to a possibility of failure in automating certificate renewal, a cost of manual certificate renewal, certificate policy inconsistency, a possibility of violating security policies, and so on.

Accordingly, an application certificate issuance and management scheme suitable for a cloud environment or a container environment is required.

### SUMMARY

The present disclosure has been derived to meet the above-described requirements of the related art, and an objective of the present disclosure is to provide a method and an apparatus capable of issuing application certificates and automating machine Identifier (ID) management in a manner suitable for a cloud environment or a container environment.

Another objective of the present disclosure is to provide a machine ID management method and an apparatus capable of providing consistent application certificate issuance and automated machine ID management policies even in a cloud environment.

Still another objective of the present disclosure is to provide a machine ID management method and an apparatus capable of effectively synchronizing application certificate renewal and distribution cycles in a multi-cloud environment.

A cloud environment-based machine Identifier (ID) management method performed by a certificate management module of a server, according to exemplary embodiments, may comprise: receiving, through an integrated gateway, a certificate issuance request from an agent in a cluster of any one cloud provider among a plurality of cloud providers; delivering a policy verification request for the certificate request to a certificate policy engine; receiving, from the certificate policy engine, a policy-based approval for the certificate request; based on the policy-based approval, delivering a certificate issuance request to a certificate authority of a certificate issuance module; and delivering a certificate issued from the certificate authority to the integrated gateway.

The method may further comprise: controlling, by the certificate management module, the certificate authority having a certificate signed by a root certificate authority, to generate and store encryption keys through a key management system, and to issue a digital certificate for a Pod or an application of a specific node in a specific cluster that is a target of the certificate issuance request.

The method may further comprise: receiving a certificate status review request from the agent; determining a certificate scheduled to expire based on the certificate status review request;
delivering a renewal approval request for the certificate scheduled to expire to the certificate policy engine; and receiving, from the certificate policy engine, a renewal approval response or a renewal rejection response based on a pre-stored certificate policy for the renewal approval request.

The method may further comprise: delivering a certificate renewal request to the certificate issuance module based on the renewal approval response; and delivering a renewed certificate according to the certificate renewal request to the integrated gateway.

The method may further comprise: detecting, from the agent connected to the integrated gateway, a certificate requiring revocation.

The method may further comprise: delivering a revocation approval request for the certificate requiring revocation to the certificate policy engine; and receiving, from the certificate policy engine, a certificate revocation approval response or a certificate revocation rejection response based on a pre-stored certificate policy.

The method may further comprise: updating a certificate revocation list based on the certificate revocation approval.

The method may further comprise: requesting certificate revocation to an online certificate status protocol OCSP server based on the certificate revocation approval.

A cloud environment-based machine Identifier (ID) management apparatus according to exemplary embodiments, may comprise: an integrated gateway that receives, through the integrated gateway, a certificate issuance request from an agent in a cluster of any one cloud provider among a plurality of cloud providers and receives a certificate issued from a certificate authority; a certificate management module that receives the certificate request from the integrated gateway, delivers a policy verification request for the certificate request to a certificate policy engine, receives a policy-based approval for the certificate request from the certificate policy engine, and based on the policy-based approval delivers a certificate issuance request to a certificate authority of a certificate issuance module; a certificate policy engine that generates a policy-based approval or a policy-based rejection for the certificate request based on a pre-stored certificate policy; and a certificate issuance module that issues a digital certificate based on the certificate issuance request of the certificate management module.

The certificate issuance module may include the certificate authority and a key management system, and the certificate authority may have a certificate signed by a root certificate authority, generate and store encryption keys through the key management system, and issue the digital certificate for a Pod or an application of a specific node in a specific cluster that is a target of the certificate issuance request.

The certificate management module may receive a certificate status review request from the agent and determine a certificate scheduled to expire based on the certificate status review request.

The certificate management module may deliver a renewal approval request for the certificate scheduled to expire to the certificate policy engine and receive, from the certificate policy engine, a renewal approval response or a renewal rejection response based on a pre-stored certificate policy for the renewal approval request.

The certificate management module may detect a certificate requiring revocation from the agent connected to the integrated gateway.

The certificate management module may deliver a revocation approval request for the certificate requiring revocation to the certificate policy engine and receive, from the certificate policy engine, a certificate revocation approval response or a certificate revocation rejection response based on a pre-stored certificate policy.

The certificate management module may update a certificate revocation list based on the certificate revocation approval.

The certificate management module may request certificate revocation to an online certificate status protocol OCSP server based on the certificate revocation approval.

A cloud environment-based machine Identifier (ID) management method performed by an agent including a certificate management module in a cluster according to exemplary embodiments, may comprise: detecting application generation in a first node of a first cluster; based on the application generation, delivering a certificate issuance request for a detected application to an integrated gateway of an application certificate management server; receiving a certificate issuance response for the certificate issuance request from the integrated gateway; and storing a digital certificate included in the certificate issuance response in a storage in the first cluster. The digital certificate may be a certificate for which certificate issuance approval is determined based on a pre-stored policy by a certificate policy engine in the application certificate management server and may be issued by a certificate authority of a certificate issuance module in the application certificate management server.

The detecting may include detecting generation of one or more applications or a first container, and the method may further comprise delivering, to the integrated gateway, logs of the first container collected by a second container or a log collector that collects logs of the first container.

The first container and the second container may share the same local host network and exchange logs via the same directory; or the first container and the second container, or a plurality of containers in the first node, may share a local host network and a storage and may be executed together.

By the agent connected to the integrated gateway, in order to maintain consistency of application certificate policies corresponding to cloud-based certificate management services having different root certificate authorities or different certificate policies including ACM Amazon Web Services Certificate Manager, Azure Key Vault, and GCP CA Google Cloud Platform Certificate Authority, different certificate formats, encryption strengths, or encryption algorithms may be converted into a standardized format according to certificate policies, and metadata and lifecycle information of certificates may be managed in the application certificate management server through the integrated gateway.

According to another aspect of the present disclosure for solving the above-described technical problem, a cloud environment-based machine ID management apparatus may include a processor; and a memory connected to the processor and storing at least one instruction. By the at least one instruction, the processor is configured to: receive a certificate issuance request from an agent in a cluster through an integrated gateway; receive, by a certificate lifecycle management module, the certificate request from the integrated gateway; deliver a policy verification request for the certificate request to a certificate policy engine; receive a policy-based approval for the certificate request from the certificate policy engine; deliver, based on the policy-based approval, a certificate issuance request to a certificate authority of a certificate issuance module; and deliver a certificate issued by the certificate authority to the integrated gateway.

According to the present disclosure, a problem in which it is impossible to maintain consistency of an in-house certificate policy due to different certificate issuance policies of ACM Amazon Web Services Certificate Manager, Azure Key Vault, GCP CA Google Cloud Platform Certificate Authority, etc., in the related art may be resolved. That is, even when certificate formats such as X.509, encryption strengths, encryption algorithms, etc. are different, consistency of a certificate management policy may be maintained.

In addition, according to the present disclosure, a certificate synchronization problem caused by differences in certificate renewal and distribution cycles among multiple services Istio, etc. within a cluster, mismatches in certificate repositories, and inconsistencies in reference locations in the related art may be resolved. That is, according to a certificate synchronization scheme of the present disclosure, a problem in which a security connection failure occurs due to a certificate synchronization failure, thereby causing service interruption and an increase in a risk of a man-in-the-middle attack may be resolved.

In addition, according to the present disclosure, a problem in which, when Pods automatically receive and are synchronized with a latest certificate through a Vault instance in a single cloud environment in the related art, additional certificate synchronization must be manually performed in a multi-cloud environment due to the absence of a mechanism for automating data among nodes of a Vault execution environment may be resolved. That is, according to a certificate management automation scheme of the present disclosure, data among nodes of the Vault execution environment may be automatically processed.

### BRIEF DESCRIPTION OF THE DRAWINGS

**In** order that the disclosure may be well understood, there will now be described various forms thereof, given by way of example, reference being made to the accompanying drawings, in which:
FIG. 1 is a conceptual diagram of machine identity to which a cloud environment-based machine Identifier (ID) management method according to an exemplary embodiment of the present disclosure may be applied.
FIG. 2 is a schematic block diagram of a cloud environment-based machine ID management apparatus according to an exemplary embodiment of the present disclosure.
FIG. 3 is a schematic block diagram of a certificate management module that may be employed in the machine ID management apparatus of FIG. 2.
FIG. 4 is a schematic block diagram of a certificate policy engine that may be employed in the machine ID management apparatus of FIG. 2.
FIG. 5 is a schematic block diagram of a certificate issuance module that may be employed in the machine ID management apparatus of FIG. 2.
FIG. 6 is a block diagram of a first cluster of a cloud environment to which a cloud environment-based machine ID management method according to another exemplary embodiment of the present disclosure may be employed.
FIG. 7 is a schematic block diagram of a configuration of an agent that may be employed in the cluster of FIG. 6.
FIG. 8 is a block diagram for explaining an overall configuration and main operating principles of a cloud environment-based machine ID management system according to still another exemplary embodiment of the present disclosure.
FIG. 9 is a flowchart of a certificate issuance process that may be employed in the machine ID management system of FIG. 8.
FIG. 10 is a flowchart of a certificate renewal process that may be employed in the machine ID management system of FIG. 8.
FIG. 11 is a flowchart of a certificate revocation process that may be employed in the machine ID management system of FIG. 8.
FIG. 12 is a flowchart of a cloud environment-based machine ID management method according to still another exemplary embodiment of the present disclosure.
FIG. 13 is a block diagram of a cloud environment-based machine ID management apparatus according to still another exemplary embodiment of the present disclosure.

### DETAILED DESCRIPTION

The present disclosure may be embodied with various modifications and may have various exemplary embodiments, and specific exemplary embodiments will be illustrated in the drawings and described in detail. However, this is not intended to limit the present disclosure to specific embodiments, and the present disclosure should be understood to include all modifications, equivalents, and substitutes falling within the spirit and technical scope of the present disclosure.

Terms such as first and second may be used to describe various components, but the components should not be limited by such terms. Such terms are used only for the purpose of distinguishing one component from another component. For example, without departing from the scope of the present disclosure, a first component may be referred to as a second component, and similarly, a second component may be referred to as a first component. The term "and/or" includes any combination of a plurality of related listed items or any one of a plurality of related listed items.

In exemplary embodiments of the present application, "at least one of A and B" may mean one or more of A or B. In addition, in exemplary embodiments of the present application, "one or more of A and B" may mean one or more of A or B.

When a component is referred to as being "connected to" or "coupled to" another component, the component may be directly connected to or coupled to the other component, or an intervening component may be present. In contrast, when a component is referred to as being "directly connected to" or "directly coupled to" another component, it should be understood that no intervening component is present.

Terms used in the present application are used only for the purpose of describing specific exemplary embodiments and are not intended to limit the present disclosure. Singular expressions include plural expressions unless the context clearly indicates otherwise. In the present application, terms such as "include" or "have" are intended to designate the presence of features, numbers, operations, components, parts, or combinations thereof described in the specification, and should not be understood to preclude the presence or addition of one or more other features, numbers, operations, components, parts, or combinations thereof.

Unless otherwise defined, all terms used herein, including technical or scientific terms, have the same meanings as commonly understood by a person having ordinary skill in the art to which the present disclosure pertains. Terms such as those defined in commonly used dictionaries should be interpreted as having meanings consistent with meanings in the context of the related art, and should not be interpreted as having idealized or overly formal meanings unless expressly defined in the present application.

Hereinafter, preferred exemplary embodiments of the present disclosure will be described in more detail with reference to the accompanying drawings. In describing the present disclosure, the same reference numerals are used for the same components shown in the drawings in order to facilitate an overall understanding, and duplicate descriptions of the same components will be omitted.

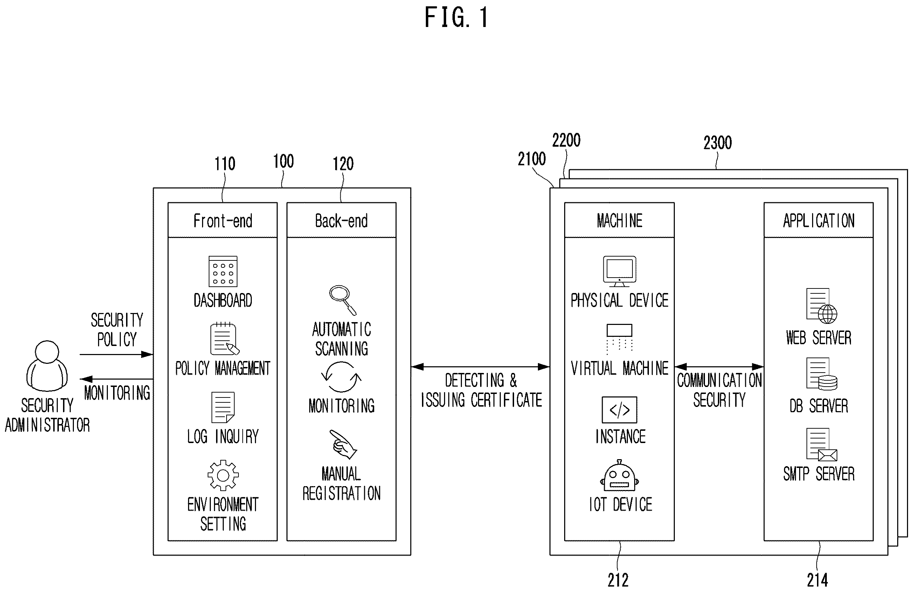

FIG. 1 is a conceptual diagram of machine identity to which a cloud environment-based machine ID management method according to an exemplary embodiment of the present disclosure may be applied.

Referring to FIG. 1, a machine ID management method may be implemented such that, when Pods are generated on nodes within clusters 2100, 2200, and 2300 of a cloud environment by a product server 100, certificates for the Pods are issued, renewed, and revoked. The product server 100 may include an application certificate issuance and machine ID management server and may be briefly referred to as an application certificate management server.

The product server 100 may include a front-end region 110 and a back-end region 120 in order to provide functions of certificate generation, distribution, renewal, and revocation. Certificates may be used in internal systems of clusters, devices, user applications, etc. Certificates may be referred to as application certificates.

Certificates may be, for example, digital certificates used to prove that an application is trusted and may be generated based on a public key and private key pair. Certificates may be used to verify whether an application is distributed from a trusted source, identify what an application is, perform inter-server communication, API requests, secure signing, encrypted communication, etc.

Certificates may include a public key certificate X.509, a private key, a certificate signing request CSR, a certificate authority CA, etc.

Certificates may have a lifecycle including key pair generation, generation of a certificate signing request CSR and submission to a certificate authority CA, certificate issuance, distribution to an application, renewal before expiration issuance of a renewed certificate, and revocation. Revocation may include reflecting a certificate approved for revocation in a certificate revocation list CRL or requesting certificate revocation from an online certificate status protocol server.

The front-end region 110 may be configured as a user interface for a security administrator, etc., to input or configure security policies for application certificates and to support monitoring for application certificate management. The front-end region 110 may include functions or configurations for a dashboard, policy management, log inquiry, environment settings, etc. A certificate policy may be configured to evaluate certificate request conditions based on an open policy agent OPA or internal logic.

The back-end region 120 may include logic and a certificate system for application certificate lifecycle management. The back-end region 120 may detect certificates of applications generated in the clusters 2100, 2200, and 2300 and may issue certificates. The back-end region 120 may be configured to support automatic scanning functions, monitoring functions, manual registration functions, etc.

In the back-end region 120, the certificate system may include means or components for certificate issuance, renewal, and revocation. For example, the certificate system may include a key management system KMS or may be configured to interoperate with the KMS, and may optionally further include a hardware security module HSM or may be configured to additionally interoperate with the HSM.

In addition, the back-end region 120 may support authentication tokens, mutual transport layer security mTLS, internet protocol IP filtering, etc. for API application programming interface security, may store logs for all requests, responses, signatures, and changes, and may be configured to enable audit logs or log tracing.

Each of the clusters 2100, 2200, and 2300 in the cloud environment may refer to a structure in which multiple servers are operated as one system and may further include an agent of the present exemplary embodiment. A server may be referred to as a machine or a node.

A cloud environment refers to an environment in which an enterprise or a user uses computing resources through a cloud platform such as Amazon Web Services AWS, Azure, Google Cloud Platform GCP, etc., without directly operating physical servers.

An agent installed in the cluster 2100, 2200, or 2300 may include a certificate management module and a communication module. Such an agent will be described in detail below. In addition, the cluster 2100, 2200, or 2300 refers to a structure in which multiple servers or nodes cooperate to operate as one, and a plurality of nodes or a plurality of servers may form a cluster.

A server or a node may refer to an independent computer that performs a single function or performs individual functions. Each node may be implemented as a logical machine and may include one or more Pods.

A node refers to a server, machine, virtual machine VM, or physical node on which Pods are actually executed within a cluster. That is, a node or a machine 212 may include a physical device, a virtual machine, an instance, an internet of things IoT device, etc. An instance may refer to a virtual server or a virtual computer created in a cloud and, based on an application being executed, may refer to a single executed process or an execution environment.

A Pod is a logical unit containing one or more containers. A Pod may refer to a grouping of containers that are closely connected and must operate together as one. Containers within a Pod may operate together while sharing the same environment network, storage, etc., and may have the same lifecycle.

In addition, a Pod may refer to a smallest deployment unit used in an open-source platform for managing containerized workloads and services, and may mean an execution unit bundling one or more containers. A Pod may be an application or a part of an application, and may also be a system component.

In addition, a Pod may have one main container, and the main container may be executed together with an auxiliary container. In this case, the main container may be an application 214 such as a web server that processes user requests, a database DB server, a simple mail transfer protocol SMTP server, etc., and the auxiliary container may be a log collector that collects logs of the main container and transmits the logs to an outside.

As described above, a machine may refer to a physical server or a virtual server on which an application is actually executed, and may be referred to as a node. Such a node may be classified into a master node for cluster control control plane and a worker node on which Pods are actually deployed and executed. An expression of Pods generated within a node may refer to Pods deployed on a specific worker node.

An application may refer to an executable program having services, functions, etc. provided to a user. An application may be executed in a Pod on a node machine. In this case, a machine, as an actual execution environment, may host Pods on physical or virtual servers in a cluster. In Kubernetes, an application may be composed of multiple Pods and containers.

An open-source platform usable in the cluster 2100, 2200, or 2300 may be configured to support functions of automatically adjusting a number of Pods according to usage, automatically restarting dead containers, evenly distributing requests among multiple containers, updating an application without service interruption, etc. The open-source platform may include an API server, a scheduler, a controller manager, etc.

A scheduler of the open-source platform may, when creating a Pod, determine on which worker node to execute the Pod based on resource usage status central processing unit, memory, etc., certificate policies, cluster status, etc. The open-source platform may refer to an operating system that automatically deploys, scales, and recovers containers or applications. The open-source platform may include Kubernetes that automatically deploys applications to machines. In Kubernetes, an application may logically use an entire cluster, and actual execution of an application may be performed on nodes machines.

According to the cloud environment-based application certificate issuance and machine ID management technology of the present exemplary embodiment, Pod creation within a cluster may be detected through a centralized certificate management system, certificate management agents, and a policy engine, and certificates of applications executed within Pods may be automatically issued, renewed, and revoked.

In particular, according to the present disclosure, based on agents installed within a cloud, certificate creation, renewal, and deletion may be automatically processed for applications dynamically generated within the cloud. In addition, according to the present disclosure, based on a centralized certificate management system hereinafter referred to as a certificate management server, APIs of multiple cloud environments may be interconnected via an API gateway, all certificates within all clouds may be centrally synchronized, and consistent policies may be implemented by transmitting common commands among agents.

Furthermore, a certificate lifecycle management policy engine hereinafter referred to as a certificate policy engine may be configured to include a certificate policy list manually defined by a security administrator and an automatic approval module for rule-based certificate issuance, creation, renewal, and revocation, such that the certificate management server may determine approval or rejection of certificate issuance, creation, renewal, and revocation approval requests on a rule basis and internally or externally return approval or rejection responses.

As described above, in the cloud environment-based application certificate issuance and machine ID management technology, by using a certificate management server to be described later corresponding to an application certificate management apparatus, Pod or application creation or deletion events in a cloud environment may be dynamically detected, and certificate synchronization of multiple clusters may be supported. Accordingly, a certificate issuance speed of the certificate management server may be improved.

Moreover, the technology of the present disclosure may be configured to automatically inject certificates for each service by interoperating with a Kubernetes API and a service mesh, and thereby transport layer security TLS may be applied even when an application does not separately configure a certificate. This may reduce operational complexity of the certificate management server. In addition, based on automatic revocation of remaining certificates upon Pod deletion, leakage of certificates or encryption keys may be prevented, thereby improving security.

In addition, according to the present disclosure, by dynamically issuing certificates in a Kubernetes-native manner for cloud certificate management, the present disclosure can flexibly respond to autoscaling and service creation and revocation lifecycles, and thereby development costs can be reduced. In addition, certificate synchronization of multiple clusters can be supported through synchronization among agents within a cluster, and thereby consistent certificate policies can be maintained even in multi-cluster and hybrid cloud environments. Furthermore, operational costs can be reduced by supporting manual configuration, etc. through automation of transport layer security TLS in a Kubernetes service environment.

Hereinafter, an application certificate issuance and machine ID management configuration and procedure will be described focusing on any one cluster among multiple clusters. A configuration and an operating principle applied to one cluster may be identically or similarly applied to each of the remaining clusters.

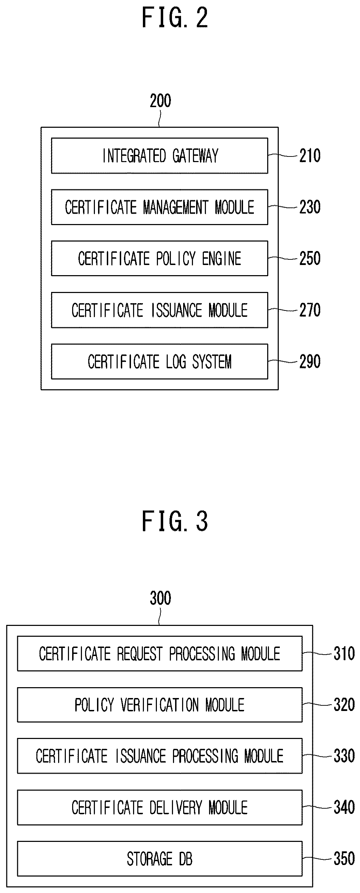

FIG. 2 is a schematic block diagram of a cloud environment-based machine ID management apparatus according to an exemplary embodiment of the present disclosure.

Referring to FIG. 2, a machine ID management apparatus 200 may include an integrated gateway 210, a certificate management module 230, a certificate policy engine 250, a certificate issuance module 270, and a certificate log system 290. The machine ID management apparatus 200 may correspond to the product server described above with reference to FIG. 1. More specifically, the machine ID management apparatus 200 may substantially correspond to a back-end region of the product server.

The integrated gateway 210 may be connected to a plurality of clusters through a network and may be referred to as an API integrated gateway. The integrated gateway 210 may refer to a system serving as a central gateway that aggregates back-end API services of the clusters into a single endpoint and performs API routing, load balancing, authentication, security, API version management, logging, auditing, traffic control such as rate limiting, transformation, composition, etc.

The integrated gateway 210 may process certificate issuance requests and certificate status review requests from clusters including agents and may detect certificates requiring revocation through the agents. In addition, the integrated gateway 210 may deliver certificate issuance requests or certificate status review requests to the certificate management module 230, or may deliver verified certificate information to the certificate management module 230.

The certificate management module 230 processes external requests such as certificate issuance requests from agents delivered through the integrated gateway 210. The certificate management module 230 may obtain approval for certificate issuance or certificate renewal on a policy basis through the certificate policy engine 250 and may issue or renew certificates through the certificate issuance module 270. Issued certificates or renewed certificates may be delivered to the integrated gateway 210.

The certificate policy engine 250 receives, from the certificate management module 230, a policy verification request for certificate issuance or a renewal approval request for renewal of a certificate scheduled to expire, and may evaluate conditions of a requested certificate issuance or a requested certificate renewal through an open policy agent OPA or internal logic. The certificate policy engine 250 may deliver, to the certificate management module 230, a response including approval of certificate issuance or rejection of certificate issuance according to a certificate condition evaluation result based on a certificate policy, or may deliver, to the certificate management module 230, a response including approval of certificate renewal or rejection of certificate renewal.

The certificate issuance module 270 receives a certificate issuance request or a certificate renewal request from the certificate management module 230, issues a certificate or renews a certificate, and then may deliver an issued certificate or a renewed certificate to the certificate management module 230.

The certificate log system 290 may store, in a log DB, logs for all requests, responses, signatures, changes, etc. of the integrated gateway 210, the certificate management module 230, the certificate policy engine 250, and the certificate issuance module 270. The log DB may be an audit log repository capable of log tracing.

FIG. 3 is a schematic block diagram of a certificate management module that may be employed in the machine ID management apparatus of FIG. 2.

Referring to FIG. 3, a certificate management module 300 may include, as submodules for performing related functions, a certificate request processing module 310, a policy verification module 320, a certificate issuance processing module 330, a certificate delivery module 340, and a storage DB 350.

The certificate request processing module 310 may generate a policy verification request based on a certificate issuance request received from the integrated gateway. In addition, the certificate request processing module 310 may generate a renewal approval request for a certificate scheduled to expire based on a certificate status review request received from the integrated gateway.

The policy verification module 320 may deliver the policy verification request to a certificate policy engine and may receive, from the certificate policy engine, a response regarding certificate issuance approval or certificate issuance rejection. In addition, the policy verification module 320 may deliver the renewal approval request to the certificate policy engine and may receive, from the certificate policy engine, a response regarding certificate renewal approval or certificate renewal rejection.

The certificate issuance processing module 330 may request certificate issuance from a certificate issuance module based on certificate issuance approval and may receive an issued certificate from the certificate issuance module. In addition, the certificate issuance processing module 330 may request certificate renewal from the certificate issuance module based on certificate renewal approval and may receive a renewed certificate from the certificate issuance module.

The certificate delivery module 340 may deliver an issued certificate or a renewed certificate to the integrated gateway.

Meanwhile, when a certificate issuance module directly delivers an issued certificate or a renewed certificate to the integrated gateway, some functions or components of the certificate issuance processing module 330 described above and the certificate delivery module 340 may be omitted.

The storage DB 350 may store application information, device information, etc. of each cluster. The storage DB 350 may include a configuration management DB CMDB.

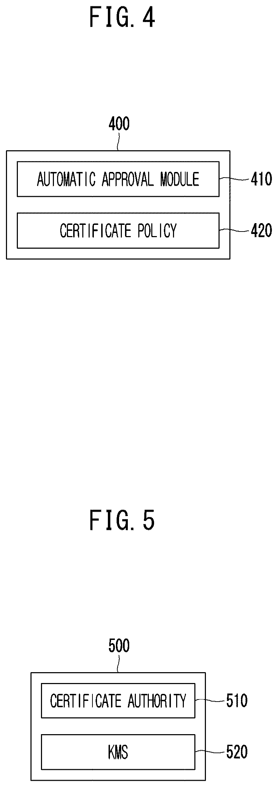

FIG. 4 is a schematic block diagram of a certificate policy engine that may be employed in the machine ID management apparatus of FIG. 2.

Referring to FIG. 4, a certificate policy engine 400 may include an automatic approval module 410 and a certificate policy 420.

The automatic approval module 410 receives a policy verification request from the certificate management module, verifies a policy for certificate issuance based on a policy preset in the certificate policy 420, and then may automatically deliver, to the certificate management module, a response regarding certificate issuance approval or certificate issuance rejection.

In addition, the automatic approval module 410 receives a renewal approval request for a certificate scheduled to expire from the certificate management module, verifies a policy for certificate renewal based on a policy preset in the certificate policy 420, and then may automatically deliver, to the certificate management module, a response regarding certificate renewal approval or certificate renewal rejection.

In addition, the automatic approval module 410 receives a revocation approval request for a certificate requiring revocation from the certificate management module, verifies a policy for certificate revocation based on a policy preset in the certificate policy 420, and then may automatically deliver, to a certificate issuance module, a response regarding certificate revocation approval or certificate revocation rejection.

FIG. 5 is a schematic block diagram of a certificate issuance module that may be employed in the machine ID management apparatus of FIG. 2.

Referring to FIG. 5, a certificate issuance module 500 may include a certificate authority CA 510 and a key management system KMS 520. The certificate issuance module 500 may further include a root certificate authority, and in this case, the certificate authority 510 may be referred to as an intermediate certificate authority or a subordinate certificate authority.

The root certificate authority may possess a self-signed root certificate. The root certificate authority may issue and sign certificates of intermediate certificate authorities or subordinate certificate authorities.

The certificate authority 510 may issue certificates signed by the root certificate authority and may generate and store encryption keys through the KMS 520. The certificate authority 510 may verify a certificate signing request, invoke the KMS 520 to generate a private key, and retrieve a generated key. The certificate authority 510 may generate a certificate of a Pod or an application of a specific node within a specific cluster that is a target of a certificate issuance request and may sign the certificate with an own key to issue a digital certificate. The digital certificate may include a certificate chain form. The certificate authority 510 may return an issued certificate to a Pod or an application of a corresponding node and may manage validity and revocation of the certificate.

The certificate issuance module 500 may include a Google Cloud Certificate Authority Service, an Amazon Web Services Private Certificate Authority, an Oracle Cloud Infrastructure OCI certificate service, or a combination thereof.

In the above case, the certificate issuance module 500 may generate and manage a root certificate authority certificate and subordinate certificate authority certificates by utilizing a certificate management service. In addition, the certificate issuance module 500 may configure and manage a root certificate authority certificate and subordinate certificate authority certificates by using a private certificate authority certificate. In addition, the certificate issuance module 500 may be configured to set up an internal certificate authority by utilizing an OCI certificate service and to install and manage a certificate on an Apache web server.

The KMS 520 may generate, store, manage, use, and delete encryption keys. The encryption keys may be symmetric keys or asymmetric keys. The KMS 520 may provide an API for certificate issuance, renewal, or revocation so that encryption keys may be used in applications, servers, data repositories, etc. The KMS 520 may generate and store a private key and a public key pair during certificate issuance or renewal of the certificate authority 510. In addition, the KMS 520 may manage a signing key of the certificate authority 510 and may include a hardware security module HSM for signing key management.

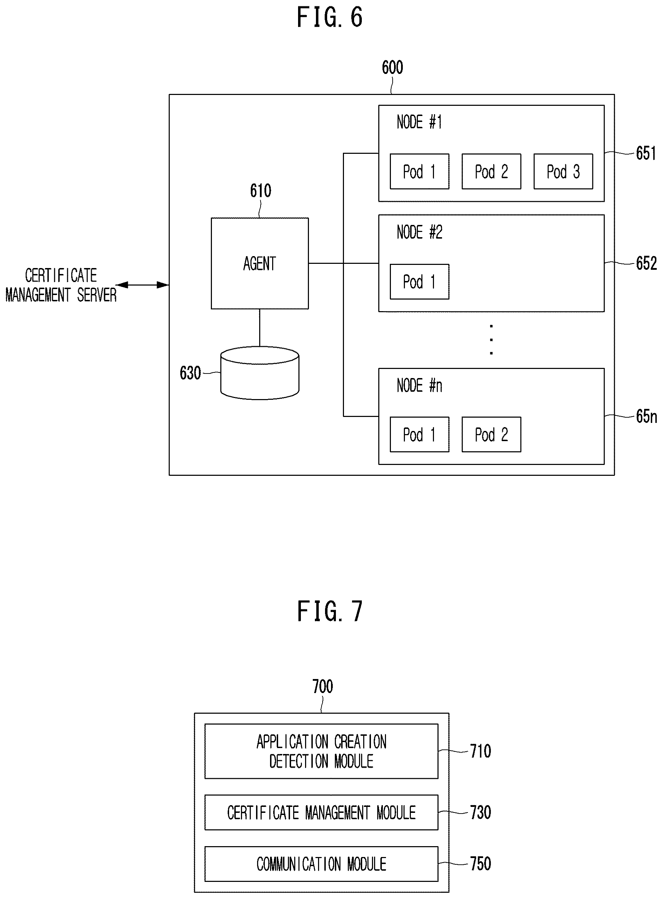

FIG. 6 is a block diagram of a cluster of a cloud environment to which a cloud environment-based machine ID management method according to another exemplary embodiment of the present disclosure may be applied.

Referring to FIG. 6, a cluster 600 may include an agent 610, a storage 630, and a first node node #1 651, a second node node #2 652, and an nth node node #n 65n. The agent 610 of the first cluster 600 may be connected to an integrated gateway of an application certificate management server through a communication module.

The application certificate management server may be referred to as an application certificate issuance and machine ID management server or a machine ID management server.

The first node 651 may include Pod 1, Pod 2, and Pod 3. The second node 652 may include Pod 1. The nth node 65n may include Pod 1 and Pod 2.

When Pod 3 in the first node 651 is a newly generated Pod, the agent 610 may detect generation of Pod 3.

The cluster 600 may detect Pod generation based on one or more selected from real-time detection of Pod states of all namespaces of the first node 651, recent resource creation events, audit log recording for resource requests, controller-based Pod resource monitoring, log output upon Pod resource creation, detection of a change in a number of Pod creations based on Prometheus recording rules, policy-based monitoring that verifies whether a specific condition is violated or allowed upon Pod creation, etc. The agent 610 may receive Pod generation information from the cluster 600. Of course, the agent 610 may be configured to directly detect Pod generation through one or more of the Pod generation detection schemes described above.

Based on detection of Pod generation, the agent 610 may request issuance of a certificate for a generated Pod or for an application executed within the Pod from the application certificate management server. For this purpose, the agent 610 may generate a certificate signing request CSR and may transmit the generated CSR to the integrated gateway of the application certificate management server.

The agent 610 may receive a certificate from the integrated gateway of the application certificate management server and may store the received certificate in the storage 630 within the cluster 600.

The storage 630 may include an external storage resource or an internal storage resource used by Pods in the cluster 600. The storage 630 enables a container or a Pod including a container to store and maintain data.

Here, since a container is basically a logical configuration, the storage 630 may be used to persistently store data such as databases, logs, certificates, etc. A container may refer to at least a part of an application such as a web server that processes user requests, a database DB server, a simple mail transfer protocol SMTP server, etc.

For example, one Pod may mount one or more volumes of the storage 630. The storage 630 may perform functions such as data retention, state maintenance, certificate storage, etc.

FIG. 7 is a schematic block diagram of a configuration of an agent that may be employed in the cluster of FIG. 6.

Referring to FIG. 7, an agent 700 may correspond to the agent mounted in a cluster described above referring to 610 of FIG. 6. The agent 700 may include an application creation detection module 710, a certificate management module 730, and a communication module 750. The communication module 750 included in the agent 700 may be a functional part of at least a portion of a communication module of a cluster in which the agent 700 is mounted or may include a component corresponding to such a functional part. The cluster may include a storage.

The application creation detection module 710 may detect a Pod generated in a specific node within the cluster. The specific node may include one or more Pods. The application creation detection module 710 may be referred to as a Pod creation detection module. The application creation detection module 710 may be included in the certificate management module 730.

The certificate management module 730 may deliver a certificate request to the communication module 750 based on detection of Pod creation. In addition, the certificate management module 730 may receive, from the communication module 750, a certificate corresponding to the certificate request and may store the certificate in a storage within the cluster.

The communication module 750 may receive a certificate request from the certificate management module 730, generate a certificate signing request CSR based on the certificate request, and transmit the CSR to the integrated gateway. The CSR may be an encoded text file provided to a certificate authority when requesting an SSL secure sockets layer certificate. The CSR may include information to be included in a certificate, such as a cluster name, a domain name, a region, a country, etc.

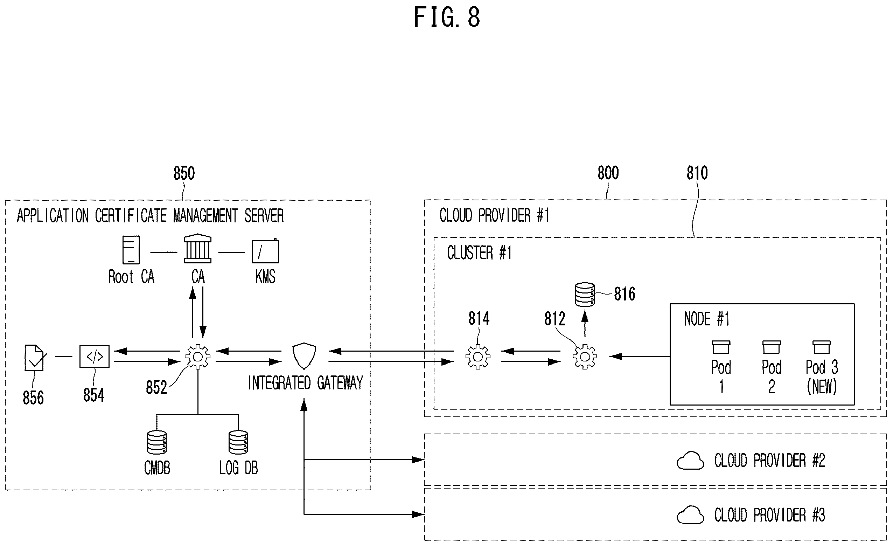

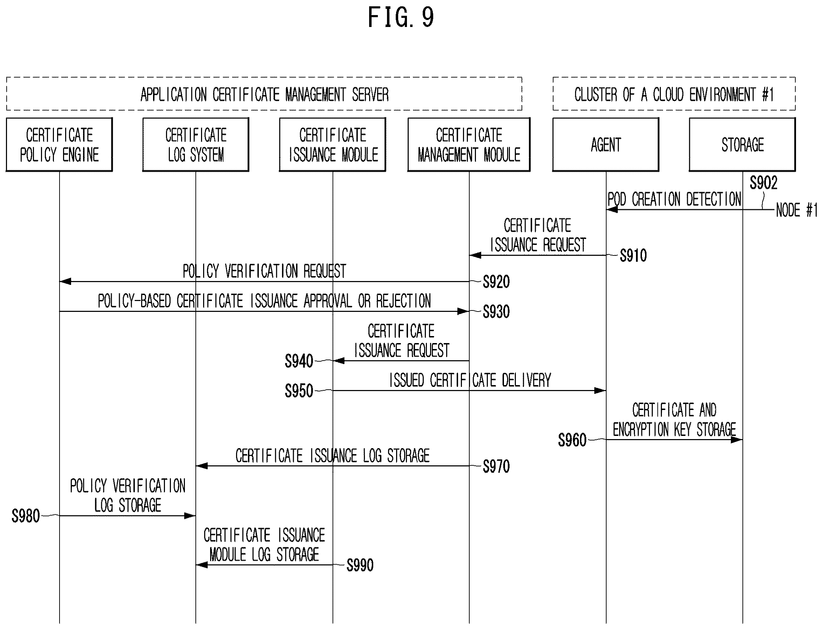

FIG. 8 is a block diagram for explaining an overall configuration and main operating principles of a cloud environment-based machine ID management system according to still another exemplary embodiment of the present disclosure. FIG. 9 is a flowchart of a certificate issuance process that may be employed in the machine ID management system of FIG. 8.

Referring to FIG. 8 and FIG. 9, a machine ID management system includes a cloud provider 800 and an application certificate management server hereinafter also referred to as a machine ID management server 850. The cloud provider 800 may be one of a plurality of cloud providers including a first cloud provider cloud provider #1, a second cloud provider cloud provider #2, and a third cloud provider cloud provider #3, and may include one or more clusters. The cluster may include a first cluster cluster #1 810.

The first cluster 810 may include one or more nodes, and the node may include a first node node #1. The first node may include Pod 1, Pod 2, and Pod 3, and Pod 3 may be a newly generated Pod. An agent in the first cluster 810 may include a certificate management module 812 and a communication module 814.

Based on generation of Pod 3 in the first node being detected (S902), the certificate management module 812 in the first cluster 810 may deliver a certificate request to the communication module 814. The communication module 814 may generate a certificate signing request CSR and may deliver the generated CSR to an integrated gateway.

The integrated gateway may deliver the certificate issuance request to a certificate management module 852 in the machine ID management server 850 (S910).

The certificate management module 852 may deliver a policy verification request for the CSR to an automatic approval module 854 of a certificate policy engine (S920). The certificate policy engine may include the automatic approval module 854 and a certificate policy 856.

Based on the policy verification request, the automatic approval module 854 may verify a policy for certificate issuance based on a pre-stored certificate policy 856 and may deliver, to the certificate management module 852, a response including certificate issuance approval or certificate issuance rejection (S930).

Based on certificate issuance approval, the certificate management module 852 may deliver a certificate request to a certificate authority CA of a certificate issuance module (S940). The certificate issuance module may include the certificate authority CA and a key management system KMS, and may optionally further include a root certificate authority root CA.

The certificate authority CA may issue a certificate by interoperating with the root certificate authority root CA and the key management system KMS, and may deliver the issued certificate to the communication module 814 of the agent in the first cluster 810 through the certificate management module 852 and the integrated gateway or through the integrated gateway (S950).

The communication module 814 may deliver the certificate to the certificate management module 812, and the certificate management module 812 may store the certificate and an encryption key in a storage 816 in the first cluster 810 (S960).

The certificate management module, the certificate policy engine, and the certificate issuance module may store logs for certificate issuance requests, policy verification, certificate issuance approval or rejection, certificate issuance, etc. in a certificate log system (S970, S980), and (S990). The certificate log system may include a log DB.

The certificate management module 852 in the machine ID management server 850 described above may be referred to as a certificate lifecycle management module in order to distinguish the certificate management module 852 from the certificate management module 812 of the agent in the cluster.

According to the present exemplary embodiment, in a cloud environment in which a plurality of cloud providers exist, and in a container environment including containers applications executed within Pods machines on nodes in clusters of each cloud provider, based on Pod generation within a cluster, certificates for Pods or applications within Pods may be automatically issued based on pre-stored policies through interoperation with an agent within the cluster.

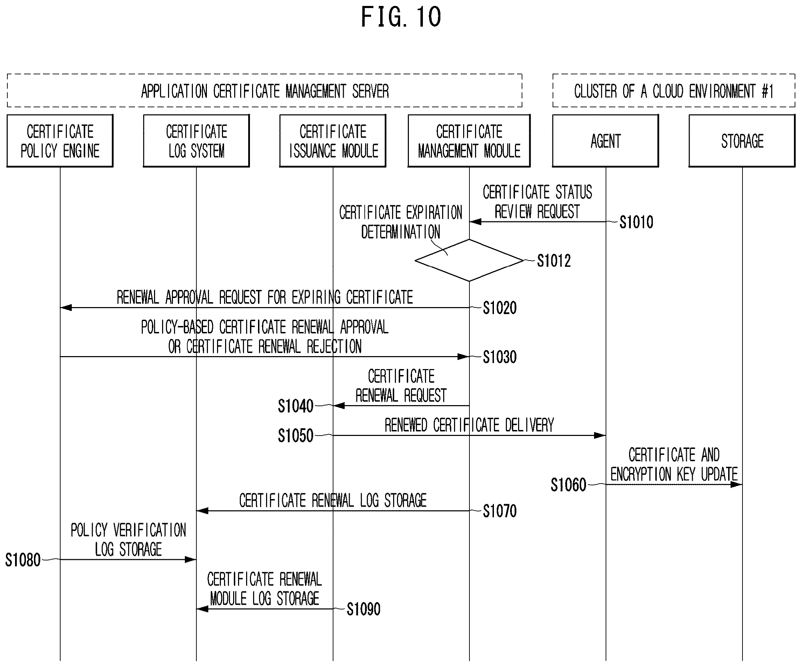

FIG. 10 is a flowchart of a certificate renewal process that may be employed in the machine ID management system of FIG. 8.

Referring to FIG. 10, a certificate management module in an application certificate management server may receive, through an integrated gateway, a certificate status review request periodically or intermittently from an agent in a first cluster S1010.

**Based** on the certificate status review request, the certificate management module may detect or determine a certificate scheduled to expire S1012.

**Based** on a certificate scheduled to expire being detected, the certificate management module may deliver a renewal approval request for the certificate scheduled to expire to a certificate policy engine S1020. The certificate policy engine may evaluate certificate renewal based on a policy prescribed in a certificate policy and may deliver, to the certificate management module, a response including policy-based certificate renewal approval or certificate renewal rejection S1030.

Based on certificate renewal approval, the certificate management module may deliver a certificate renewal request to a certificate issuance module S1040. A certificate authority CA of the certificate issuance module may renew a certificate by interoperating with a root certificate authority root CA and a key management system KMS, and may deliver a renewed certificate to an agent in the first cluster through the integrated gateway S1050.

The agent may store the certificate and an encryption key in a storage 816 in the first cluster 810, thereby updating the certificate and the encryption key S1060.

The certificate management module, the certificate policy engine, and the certificate issuance module may store, in a certificate log system, logs related to a certificate renewal request, policy verification, certificate renewal approval or rejection, certificate renewal, etc. S1070, S1080, and S1090.

According to the present exemplary embodiment, in a cloud environment in which a plurality of cloud providers exist, and in a container environment including containers applications executed within Pods machines on nodes in clusters of each cloud provider, based on an application status review request within a Pod of an agent in a cluster, a certificate for an application within the Pod may be automatically renewed based on a pre-stored policy.

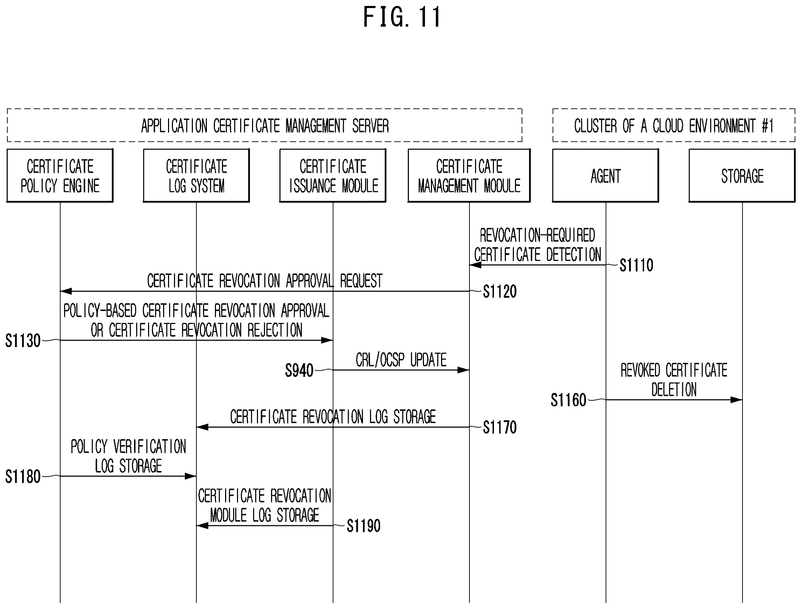

FIG. 11 is a flowchart of a certificate revocation process that may be employed in the machine ID management system of FIG. 8.

Referring to FIG. 11, a certificate management module in an application certificate management server may detect, in cooperation with an agent in a first cluster connected through an integrated gateway, a certificate requiring revocation in the first cluster S1110. Detection of a certificate requiring revocation may be performed through a scheme similar to the Pod creation detection described above.

Based on detection of a certificate requiring revocation, the certificate management module may deliver a revocation approval request for the certificate scheduled to expire to a certificate policy engine S1120. The certificate policy engine may evaluate certificate revocation based on a policy set in a certificate policy and may deliver, to a certificate issuance module, a response including policy-based certificate revocation approval or certificate revocation rejection S1130.

Based on certificate revocation approval, the certificate issuance module may revoke a certificate in cooperation with the certificate management module and may update a certificate revocation list CRL or may request certificate revocation to an online certificate status protocol OCSP S1140.

Based on detection of a certificate requiring revocation by the certificate management module or based on a certificate revocation notification of the certificate management module not shown, the agent may delete the revoked certificate from a storage S1160.

The certificate management module, the certificate policy engine, and the certificate issuance module may store, in a certificate log system, logs related to detection of a certificate requiring revocation, a revocation approval request, a policy-based evaluation result, certificate revocation approval or rejection, CRL or OCSP update, etc. S1170, S1180, and S1190.

According to the present exemplary embodiment, in a cloud environment in which a plurality of cloud providers exist, and in a container environment including containers applications executed within Pods machines on nodes in clusters of each cloud provider, based on interoperation with an agent in a cluster, a necessity of revocation for a certificate of a container or an application executed within a Pod of the cluster may be detected, and the certificate may be automatically revoked based on a pre-stored policy.

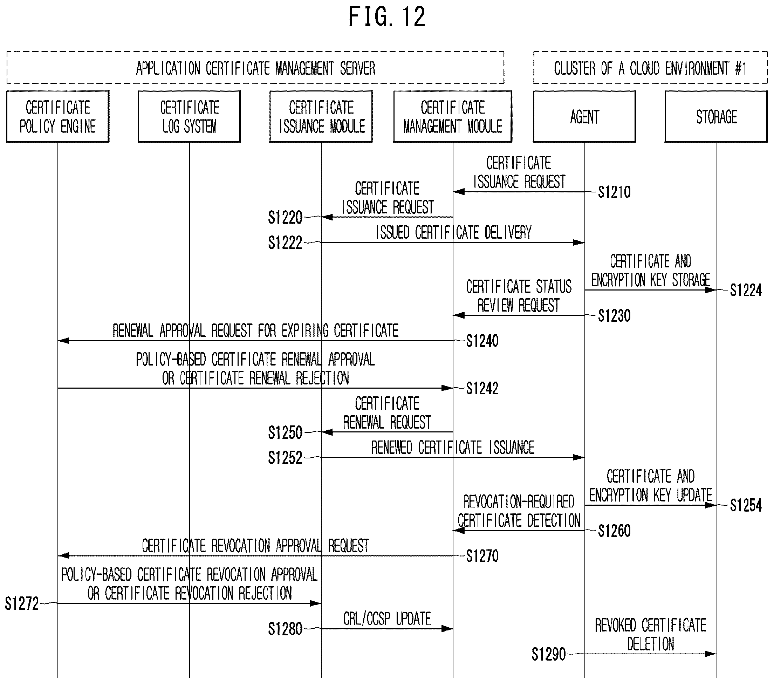

FIG. 12 is a flowchart of a cloud environment-based machine ID management method according to still another exemplary embodiment of the present disclosure.

Referring to FIG. 12, an agent detects Pod generation within a cluster and, based on detection of Pod generation, may deliver a certificate issuance request to a certificate management module through an integrated gateway S1210.

The certificate management module may obtain approval for certificate issuance on a policy basis and may deliver the certificate issuance request to a certificate issuance module S1220.

The certificate issuance module may issue a digital certificate based on the certificate issuance request and may deliver the issued certificate to the agent S1222. The agent may store the certificate and an encryption key in a storage.

The agent may periodically or intermittently transmit, through the integrated gateway, a certificate status review request for a container or an application executed within a Pod on a node in the cluster to the certificate management module S1230.

In addition, the certificate management module may detect a certificate scheduled to expire based on the certificate status review request and may deliver a renewal approval request for the certificate scheduled to expire to a certificate policy engine S1240.

The certificate policy engine may evaluate certificate renewal based on a certificate policy and may return, to the certificate management module, a response including certificate renewal approval or certificate renewal rejection S1242.

Based on certificate renewal approval, the certificate management module may deliver a certificate renewal request to the certificate issuance module S1250.

The certificate issuance module may renew a certificate based on the certificate renewal request and may deliver a renewed certificate to the agent S1252. The agent may store the certificate and an encryption key in the storage to update the certificate and the encryption key S1254.

In addition, the certificate management module may detect a certificate requiring revocation for a container or an application within the cluster through the agent S1260. Based on detection of the certificate requiring revocation, the certificate management module may deliver a revocation approval request for the corresponding certificate to the certificate policy engine S1270.

The certificate policy engine may evaluate certificate revocation based on the certificate policy and may return, to the certificate issuance module, a response including certificate revocation approval or certificate revocation rejection S1272.

Based on certificate revocation approval, the certificate issuance module may revoke the corresponding certificate and may update a certificate revocation list or may request certificate revocation to an OCSP server S1280. Based on detection of the certificate requiring revocation by the certificate management module and based on a certificate revocation notification of the certificate management module, the agent may delete the revoked certificate from the storage S1290.

The machine ID management method described above may be implemented centering on a certificate management module of a machine ID management apparatus or a certificate management module agent within a specific cluster of a cloud environment. The certificate management module or the agent may have identical or similar configurations in basic hardware configurations.

Hereinafter, a configuration of a machine ID management apparatus including a certificate management module will be described in detail, and the configuration may also be applicable to a certificate management module of an agent.

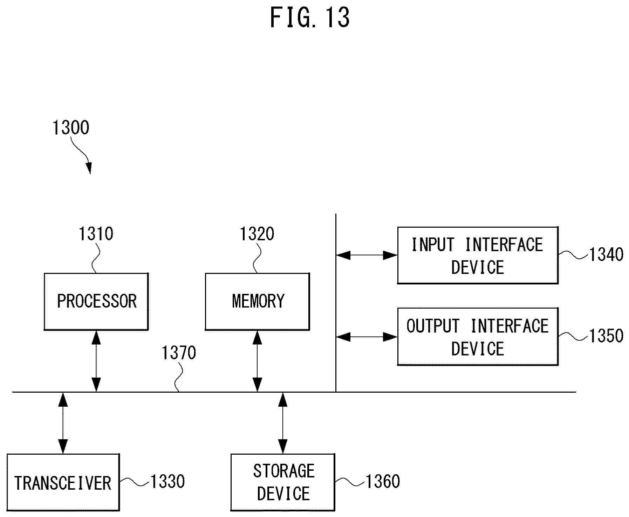

FIG. 13 is a block diagram of a cloud environment-based machine ID management apparatus according to still another exemplary embodiment of the present disclosure.

Referring to FIG. 13, a machine ID management apparatus 1300 may include one or more processors 1310 that perform certificate lifecycle management for issuing, renewing, and revoking certificates based on certificate policies when Pods are generated within specific nodes of each of a plurality of clusters in a cloud environment.

The machine ID management apparatus 1300 may further include a memory 1320 or may further include a transceiver 1330 connected to a network to perform communication. In addition, the machine ID management apparatus 1300 may further include an input interface device 1340, an output interface device 1350, a storage device 1360, etc.

Each component included in the machine ID management apparatus 1300 may be connected by a bus 1370 to perform communication with each other. Each component included in the machine ID management apparatus 1300 may be connected not through a common bus but through individual interfaces or individual buses centered on the processor 1310. For example, the processor 1310 may be connected, through dedicated interfaces, to one or more of the memory 1320, the transceiver 1330, the input interface device 1340, the output interface device 1350, or the storage device 1360.

The processor 1310 may execute program commands stored in one or more of the memory 1320 or the storage device 1360. The processor 1310 may refer to a central processing unit CPU, a graphics processing unit GPU, or a dedicated processor on which a method according to exemplary embodiments of the present disclosure is performed.

Each of the memory 1320 and the storage device 1360 may be configured with one or more of a volatile storage medium or a non-volatile storage medium. For example, the memory 1320 may be configured with one or more of a read only memory ROM or a random access memory RAM.

Meanwhile, the method according to the exemplary embodiments of the present disclosure described above may be implemented as a computer-readable program or code in a computer-readable recording medium. The computer-readable recording medium includes all types of recording devices in which information readable by a computer system is stored. In addition, the computer-readable recording medium may be distributed over computer systems connected through a network such that a computer-readable program or code is stored and executed in a distributed manner.

In addition, the computer-readable recording medium may include hardware devices specially configured to store and execute program instructions, such as a ROM, a RAM, a flash memory, etc. Program instructions may include not only machine language code generated by a compiler but also high-level language code executable by a computer using an interpreter, etc.

Although some aspects of the present disclosure have been described in the context of an apparatus, the description may also represent a description according to a corresponding method, and herein, a block or an apparatus may correspond to a method step or a feature of a method step. Similarly, aspects described in the context of a method may also be represented as corresponding blocks or items or features of a corresponding apparatus. Some or all of method steps may be performed by or using a hardware device such as, for example, a microprocessor, a programmable computer, or an electronic circuit. In some exemplary embodiments, one or more of the most important method steps may be performed by such a device.

In exemplary embodiments, a programmable logic device such as a field-programmable gate array may be used to perform part or all of functions of the methods described herein. In exemplary embodiments, a field-programmable gate array may operate together with a microprocessor to perform one of the methods described herein. In general, the methods are preferably performed by a hardware device.

Although the present disclosure has been described with reference to the exemplary embodiments, a person having ordinary skill in the art may understand that various modifications and changes may be made to the present disclosure without departing from the spirit and region of the present disclosure as set forth in the claims below.

## Claims

1. A cloud environment-based machine Identifier (ID) management method performed by a certificate management module of a server, comprising:
receiving, through an integrated gateway, a certificate issuance request from an agent in a cluster of any one cloud provider among a plurality of cloud providers;
delivering a policy verification request for the certificate request to a certificate policy engine;
receiving, from the certificate policy engine, a policy-based approval for the certificate request;
based on the policy-based approval, delivering a certificate issuance request to a certificate authority of a certificate issuance module; and
delivering a certificate issued from the certificate authority to the integrated gateway.

2. The method of claim 1, further comprising:
controlling, by the certificate management module,
the certificate authority having a certificate signed by a root certificate authority,
to generate and store encryption keys through a key management system, and
to issue a digital certificate for a Pod or an application of a specific node in a specific cluster that is a target of the certificate issuance request.

3. The method of claim 1, further comprising:
receiving a certificate status review request from the agent;
determining a certificate scheduled to expire based on the certificate status review request;
delivering a renewal approval request for the certificate scheduled to expire to the certificate policy engine; and
receiving, from the certificate policy engine, a renewal approval response or a renewal rejection response based on a pre-stored certificate policy for the renewal approval request.

4. The method of claim 3, further comprising:
delivering a certificate renewal request to the certificate issuance module based on the renewal approval response; and
delivering a renewed certificate according to the certificate renewal request to the integrated gateway.

5. The method of claim 1, further comprising:
detecting, from the agent connected to the integrated gateway, a certificate requiring revocation.

6. The method of claim 5, further comprising:
delivering a revocation approval request for the certificate requiring revocation to the certificate policy engine; and
receiving, from the certificate policy engine, a certificate revocation approval response or a certificate revocation rejection response based on a pre-stored certificate policy.

7. The method of claim 6, further comprising:
updating a certificate revocation list based on the certificate revocation approval.

8. The method of claim 6, further comprising:
requesting certificate revocation to an online certificate status protocol OCSP server based on the certificate revocation approval.

9. A cloud environment-based machine Identifier (ID) management apparatus, comprising:
an integrated gateway that receives, through the integrated gateway, a certificate issuance request from an agent in a cluster of any one cloud provider among a plurality of cloud providers and receives a certificate issued from a certificate authority;
a certificate management module that receives the certificate request from the integrated gateway, delivers a policy verification request for the certificate request to a certificate policy engine, receives a policy-based approval for the certificate request from the certificate policy engine, and based on the policy-based approval delivers a certificate issuance request to a certificate authority of a certificate issuance module;
a certificate policy engine that generates a policy-based approval or a policy-based rejection for the certificate request based on a pre-stored certificate policy; and
a certificate issuance module that issues a digital certificate based on the certificate issuance request of the certificate management module.

10. The apparatus of claim 9, wherein the certificate issuance module includes the certificate authority and a key management system, and
the certificate authority has a certificate signed by a root certificate authority, generates and stores encryption keys through the key management system, and issues the digital certificate for a Pod or an application of a specific node in a specific cluster that is a target of the certificate issuance request.

11. The apparatus of claim 9, wherein the certificate management module receives a certificate status review request from the agent and determines a certificate scheduled to expire based on the certificate status review request.

12. The apparatus of claim 11, wherein the certificate management module delivers a renewal approval request for the certificate scheduled to expire to the certificate policy engine and receives, from the certificate policy engine, a renewal approval response or a renewal rejection response based on a pre-stored certificate policy for the renewal approval request.

13. The apparatus of claim 9, wherein the certificate management module detects a certificate requiring revocation from the agent connected to the integrated gateway.

14. The apparatus of claim 13, wherein the certificate management module delivers a revocation approval request for the certificate requiring revocation to the certificate policy engine and receives, from the certificate policy engine, a certificate revocation approval response or a certificate revocation rejection response based on a pre-stored certificate policy.

15. The apparatus of claim 14, wherein the certificate management module updates a certificate revocation list based on the certificate revocation approval.
